# EUROPEAN PATENT APPLICATION

(11) **EP 4 737 229 A1**
(43) Date of publication of application: **06.05.2026**
(21) Application number: 24832210.9
(22) Date of filing: 24.04.2024
(51) Int. Cl.: B60R 22/46, B60N 2/68, B60N 2/64, B60N 2/80, B60R 22/34

(54) **VEHICLE SEAT**

(30) Priority: 28.06.2023 KR 20230083719
(71) Applicant: Autoliv Development AB, 44783 Vargarda (SE)
(72) Inventor: YOU, Jung Sang, Hwaseong-si Gyeonggi-do 18443 (KR); KIM, Taek-Choon, Hwaseong-si Gyeonggi-do 18497 (KR); HONG, Hyeon-Ki, Hwaseong-si Gyeonggi-do 18497 (KR); YOON, Ho Beom, Hwaseong-si Gyeonggi-do 18497 (KR); MOON, Chan-Ki, Hwaseong-si Gyeonggi-do 18497 (KR); LEE, Jung Min, Hwaseong-si Gyeonggi-do 18497 (KR); SUNG, Il Chang, Hwaseong-si Gyeonggi-do 18262 (KR)
(74) Representative: Müller Verweyen
(86) International application number: PCT/KR2024/005553
(87) International publication number: WO 2025/005425

(57) **Abstract**

Provided is a vehicle seat in which a retractor (200) is built into a space under an upper cross member (120) constituting a seat back frame (100) and headrest poles (300) vertically penetrate the retractor (200), such that slimness of a seat back (20) can be promoted.

## Description

### Technical Field

The present invention relates to a vehicle seat, and more particularly, to a vehicle seat in which a retractor is installed on an upper end of a seat back frame, and a headrest pole is installed to pass through the retractor.

### Background Art

A vehicle is provided with seats on which passengers may have a seat.

Typically, a vehicle seat includes a seat back that supports the upper body of a passenger, a seat cushion that supports the lower body of the passenger, and a headrest that supports the head of the passenger.

The seat is configured so that a cover member made of a cushion material is covered on a structure of a frame that forms a skeleton (framework).

The vehicle is provided with a seat belt device, which is configured to constrain and protect the upper body of the passenger in the event of an accident.

The seat belt device includes a webbing (such as a shoulder webbing or a lab webbing) configured to constrain the shoulders, chest, pelvis, and lower body of the passenger, and a retractor configured to wind the webbing.

Since the conventional vehicle seat provided with the retractor is constructed by additionally installing a separate back frame on the seat back frame and coupling the retractor to the back frame, there is a disadvantage of increasing in overall thickness of the seat back in forward/backward directions, and there is a disadvantage of relatively narrowing a passenger compartment due to the increasing thickness of the seat back and thus deteriorating ride quality.

Details described as the background art are intended merely for the purpose of promoting an understanding of the background of the present invention and should not be construed as an acknowledgment of the prior art that is already known to those of ordinary skill in the art.

(Patent Document 1) KR 10-2019-0128994A

### Disclosure of Invention

### Technical Problem

An object of the present invention is to provide a vehicle seat in which a retractor is installed to be built in an upper end of a seat back frame in a structure provided with the retractor on a seat back, and a headrest pole is installed to pass through the retractor to thin the seat back and relatively widen a passenger compartment through the slimness of the seat back, thereby improving the ride quality.

### Solution to Problem

In order to achieve the above object, a vehicle seat of the present invention includes: a seat back frame constituting a framework of the seat; and a retractor installed to be built in an internal space of the seat back frame.

The vehicle seat may further include a headrest pole installed to vertically pass through the retractor.

The seat back frame may include: a pair of side frames laterally spaced apart from each other and extending vertically; and an upper end cross member configured to connect upper ends of the pair of side frames to each other in a lateral direction, wherein the retractor may be inserted to be built in a space below the upper end cross member and be fixedly coupled to the side frames and the upper end cross member.

The retractor may include: a first mount unit in the center on which a pre-tensioner and a self-correction sensor are mounted; a second mount unit which is disposed at one side of the first mount unit and on which a spool and a load limiter are mounted; and a third mount unit which is disposed at another side of the first mount unit and on which a pre-tensioner is mounted, wherein the headrest poles may be installed to vertically pass through a space between the first mount unit and the second mount unit and a space between the first mount unit and the third mount unit, respectively.

A section through which passes the retractor in the headrest poles may be surrounded and protected by a retractor frame.

The vehicle seat may further include a webbing guide which is rotatably coupled to one side of the upper end of the seat back frame and through which a webbing passes.

In an initial state of the seat in which the webbing is not worn by a passenger, the webbing passing through the webbing guide may be disposed outside a seat bolster; when the passenger wears the webbing, the webbing may be withdrawn in an inward direction of the seat back, which is a direction, in which the webbing is worn by the passenger, due to the rotation of the webbing guide; and when the passenger releases the worn state of the webbing, the webbing guide and the webbing may be restored to the initial state due to the rotation caused by spring force of the retractor and a weight of the webbing guide.

A webbing port through which the webbing moves may be provided to vertically pass through an upper end of the seat back frame.

The webbing port may be provided at any one of a left side and a right side of the upper end of the seat back frame or be provided at both the left side and the right side of the upper end of the seat back frame.

A guide may be coupled to a periphery of the webbing port to prevent direct contact between the webbing and the webbing port.

When a passenger sitting on the vehicle seat has a body size equal to or larger than an average body size of adult humans, the webbing port may have a front width greater than a rear width thereof.

When a passenger sitting on the vehicle seat has a body size smaller than an average body size of adult humans, the webbing port may have a rear width greater than a front width thereof.

### Advantageous Effects of Invention

The vehicle seat according to the present invention may be configured so that the retractor is installed to be built in the space below the upper end cross member constituting the seat back frame, and the headrest pole is installed to vertically pass through the retractor to realize the slimness of the seat back and relatively widen the passenger compartment through the slimness of the seat back, thereby improving the ride quality.

### Brief Description of Drawings

FIG. 1 is a view illustrating a state in which a seat back frame, a retractor, and a webbing guide are separated from each other according to the present invention,
FIG. 2 is a view illustrating an assembled state of a vehicle seat illustrated in FIG. 1,
FIGS. 3 and 4 are plan and front views for explaining a state in which a headrest pole is installed to pass through the retractor according to the present invention,
FIG. 5 is a view for explaining a state in which the headrest pole passes through a retractor frame according to the present invention,
FIG. 6 is a view for explaining a structure in which the webbing guide is rotatably installed according to the present invention,
FIGS. 7 and 8 are views for explaining a webbed state before a passenger wears a webbing and a webbed state when the passenger wears the webbing according to the present invention,
FIG. 9 is a view for explaining a webbing port provided at an upper end of the seat back frame according to the present invention,
FIG. 10 is a cross-sectional view taken along line I-I in FIG. 9, and
FIGS. 11 and 12 are views for explaining a shape of the webbing port according to the present invention.

### Best Mode for Carrying out the Invention

The specific structural or functional descriptions provided for the embodiments of the present invention in this specification or application are merely illustrative for the purpose of describing the embodiments of the present invention. The embodiments of the present invention may be implemented in various forms and should not be construed as being limited to the embodiments described in this specification or application.

Since embodiments according to the present invention may be subjected to various modifications and may have various forms, specific embodiments will be illustrated in the drawings and described in detail in this specification or application. On the contrary, the present invention is intended to cover not only the exemplary embodiments, but also various alternatives, modifications, equivalents and other embodiments that may be included within the spirit and scope of the present invention as defined by the appended claims.

It will be understood that, although the terms "first", "second", etc. may be used herein to describe various elements, these elements should not be limited by these terms. These terms are only used to distinguish one element from another element. For instance, a first element discussed below could be termed a second element without departing from the teachings of the present invention. Similarly, the second element could also be termed the first element.

It will be understood that when an element is referred to as being "coupled" or "connected" to another element, it can be directly coupled or connected to the other element, or intervening elements may be present therebetween. In contrast, it should be understood that when an element is referred to as being "directly coupled" or "directly connected" to another element, there are no intervening elements present. Other expressions that describe the relationship between elements, such as "between", "directly between", "adjacent to", or "directly adjacent to", should be understood in the same way.

In the following specification, the technical terms are used only for explaining a specific exemplary embodiment while not limiting the present invention. The terms of a singular form may include plural forms unless referred to the contrary. In this specification, it will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms including technical and scientific terms used herein have the same meanings as those commonly understood by one of ordinary skill in the art to which this disclosure belongs. It will be further understood that terms, such as those defined in commonly used dictionaries, should be interpreted as having meanings consistent with their meanings in the context of the relevant art and the present invention, and are not to be interpreted in an idealized or overly formal sense unless expressly so defined herein.

A control unit (controller) according to an exemplary embodiment of the present invention may be embodied by a nonvolatile memory (not shown) configured to store an algorithm configured to control operation of various components of a vehicle or data relating to software instructions for executing the algorithm and a processor (not shown) configured to perform operations, which will be described below, using the data stored in the memory. Here, the memory and the processor may be embodied by separate chips. Alternatively, the memory and the processor may be embodied by a single chip in which the memory and the processor are integrated. The processor may be embodied as one or more processors.

Hereinafter, a vehicle seat according to a preferred embodiment of the present invention will be described with reference to the accompanying drawings.

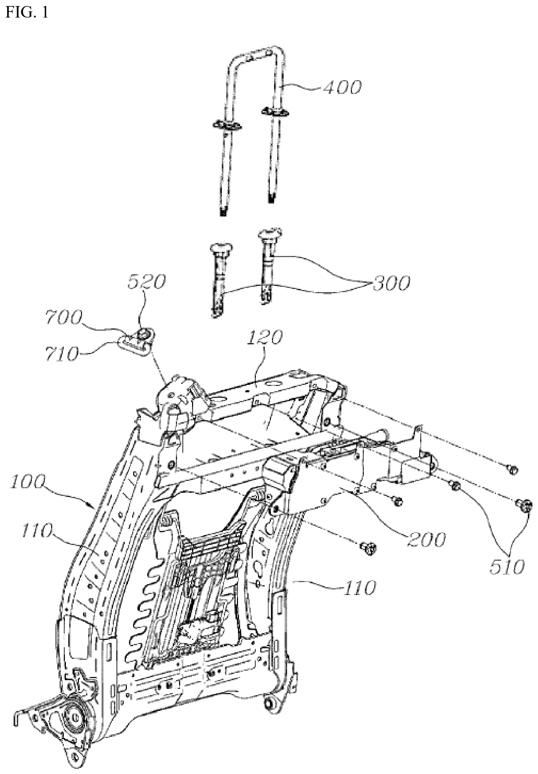

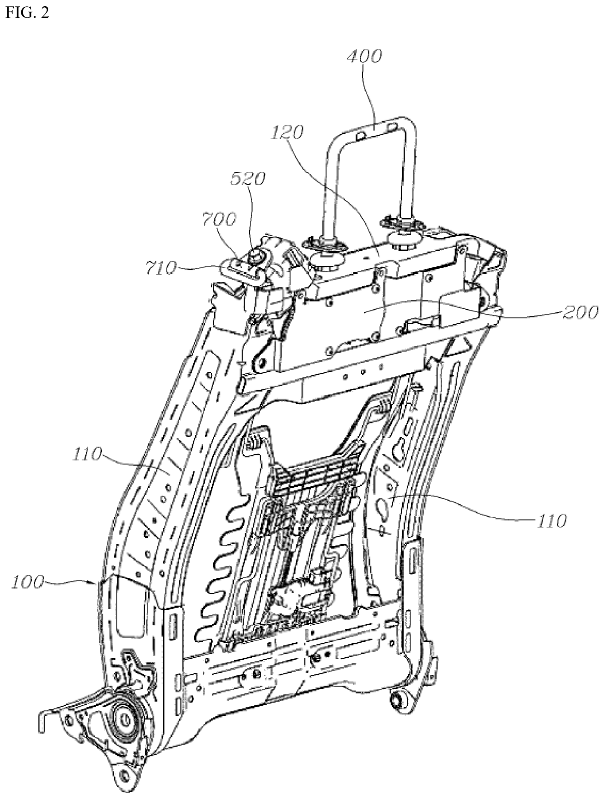

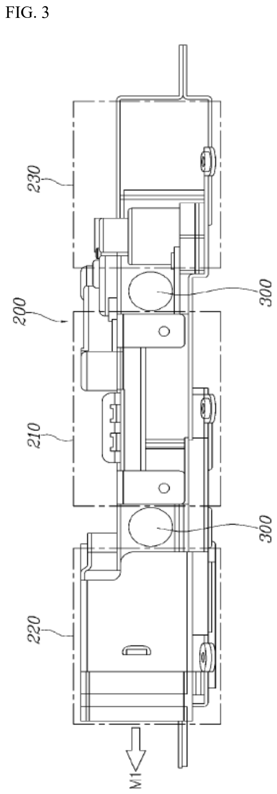

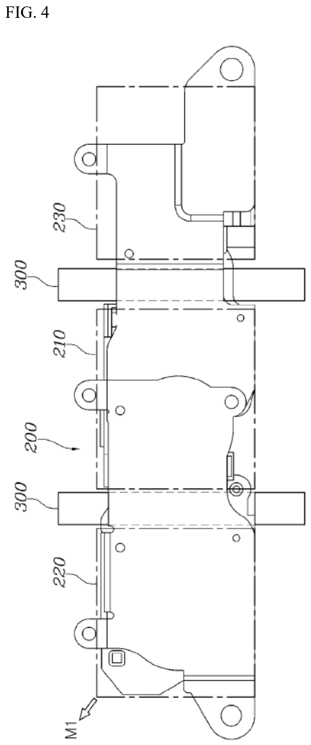

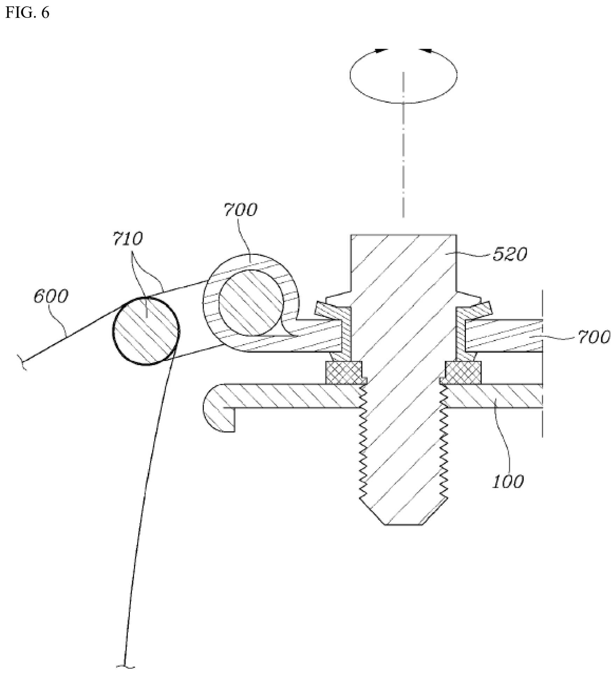

As illustrated in FIGS. 1 to 12, the seat according to the present invention is a retractor-type seat which is integrally provided with a retractor.

The vehicle seat includes a seat back that supports the upper body of a passenger, a seat cushion that supports the lower body of the passenger, and a headrest that supports the head of the passenger.

The seat is configured so that a cover member made of a cushion material is covered on a structure of a frame that forms a skeleton (framework).

As shown in the drawings, the seat according to the present invention includes a retractor 200 installed to be built in an internal space at an upper end of a seat back frame 100, and a headrest pole 300, which vertically passes through the retractor 200.

The seat back frame 100 is a component constituting a framework of the seat back, and the headrest pole 300 is a component required to install the headrest.

According to the present invention, two headrest poles 300 are laterally spaced apart from each other and coupled to each other by vertically passing through the retractor 200, and both ends of a U-shaped headrest stay 400 are coupled by passing through the two headrest poles 300, respectively. A foam member made of a cushion material, which is in contact with the head of a passenger, is coupled to a central portion of the headrest stay 400, which protrudes upward, to constitute the headrest.

With the development of a smart vehicle, improvement and diversification in functions of the seat are required, and various components are mounted on the seat to improve the functions of the seat.

As a result, in the case of the seat provided with the retractor 200, there is a problem in which an installation space required to install the retractor increasingly becomes narrow.

The seat according to the present invention is configured so that the retractor 200 is installed to be built in an upper end of the seat back frame 100, and thus, a thickness of the seat back in a forward and backward direction is reduced to thin the seat, and also, due to the slim seat back, there is an advantage in that a passenger compartment required to accommodate the passenger is relatively widened to assist improvement in ride quality.

In addition, since the seat according to the present invention is configured to be installed so that the headrest poles 300 vertically pass through the retractor 200, and thus, there is an advantage in that it is unnecessary to additionally provide the upper end of the seat back with an installation space for the headrest poles 300, thereby contributing for the slimness of the seat back.

According to the present invention, the seat back frame 100 includes a pair of side frames 110 that are spaced apart from each other in a left and right direction and extend vertically, and an upper end cross member 120 that connects upper ends of the side frames 110 to each other in the left and right direction.

The retractor 200 is inserted to be built in a space below the upper end cross member 120 and is fixedly coupled to the side frames 110 and the upper end cross member 120.

The retractor 200 is fixedly coupled to the side frames 110 and the upper end cross member 120 by a plurality of bolts 510. Thus, due to the coupling between the retractor 200, the side frames 110, and the upper end cross member 120 through the bolts, it is possible to increase in total strength of the seat back frame 100 and coupling strength of the retractor 200.

The retractor 200 includes a first mount unit 210 in the center on which a pre-tensioner and a self-correction sensor are mounted, a second mount unit 220 which is disposed at one side based on the first mount unit 210 and in which a spool and a load limiter are mounted, and a third mount unit 230 which is disposed at the other side based on the first mount unit 210 and in which a pre-tensioner is mounted.

In addition, according to the present invention, the two headrest poles 300 are installed to vertically passing through a space between the first mount unit 210 and the second mount unit 220 and a space between the first mount unit 210 and the third mount unit 230, respectively.

The retractor 200 may be provided as a combination of the pre-tensioner, the self-correction sensor, the spool, the load limiter, and the pre-tensioner.

The pre-tensioner is a device configured to instantaneously rewind the webbing to tighten the webbing upon collision of a vehicle, and the self-correction sensor is a device which is provided with an emergency locker to normally allow free movement of the webbing but to constrain the webbing in dangerous situations such as collision, emergency braking, and overturn.

The spool is a device configured to wind and unwind the webbing, the load limiter is a device configured to maintain resisting force applied to the webbing upon collision at a certain level and to gradually reduce the binding force of the webbing, thereby relieving an impact applied to the chest of the passenger, and the pre-tensioner is a device configured to instantaneously rewind the webbing to tighten the belt using a motor upon the collision of the vehicle.

Referring to the drawings, the retractor 200 has a rectangular parallelepiped shape having a length in a lateral direction, which is greater than a length in a forward and backward direction. The first mount unit 210, which is disposed in a center of the inside of the retractor 200, is provided with the pre-tensioner and the self-correction sensor, the second mount unit 220, which is disposed at a left side of the inside of the retractor 200, is provided with the spool and the load limiter, and the third mount unit 230, which is disposed at a right side of the inside of the retractor 200, is provided with the pre-tensioner.

The webbing 600, which is wound around the spool of the second mount unit 220, may be withdrawn to the outside of the retractor 200 through a left upper corner of the retractor 200 as indicated by an arrow M1 by rotation of the spool.

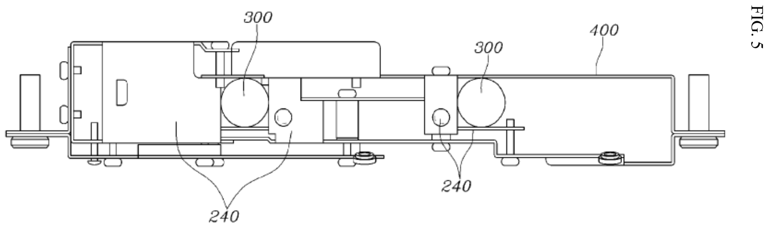

A section through which the retractor 200 passes through the headrest poles 300 may be surrounded and protected by a retractor frame 240, as illustrated in FIG. 5.

The retractor frame 240 defines an outer appearance of the retractor 200 and constitute a frame (framework) of the retractor 200.

According to the present invention, the retractor frame 240 may constrain the headrest poles 300 from the outside to maximally prevent deformation of the headrest poles 300 caused by external force applied thereto. As a result, there is an advantage of preventing internal damage to the retractor 200 caused by the deformation of the headrest poles 300.

The seat according to the present invention further includes a webbing guide 700, which is rotatably coupled to one side of the upper end of the seat back frame 100 and through which the webbing 600 passes.

The webbing guide 700 including a D-shaped ring 710 (D-ring) is rotatably coupled to one corner of the upper end of the seat back frame 100 by using a bolt 520 as a medium.

The bolt 520 passes through the D-ring 710 of the webbing guide 700 and then is screw-coupled to the one corner of the upper end of the seat back frame 100. The webbing guide 700 is rotatable about the bolt 520.

Since a webbing guide included in a conventional seat back is a stationary structure which is not rotatable, the webbing passing through the webbing guide is withdrawn only in one direction.

Thus, the conventional stationary webbing guide is not capable of changing the direction, in which the webbing is withdrawn, according to the body shape of the passenger sitting on the vehicle seat, and thus, there is a disadvantage in that frictional force caused by the webbing increases to cause inconvenience of the passenger.

However, since the webbing guide 700 according to the present invention is constructed to be rotatable about the bolt 520 at the one corner of the upper end of the seat back frame 100, it is possible to variously change the direction in which the webbing is withdrawn according to the body type of the passenger sitting on the vehicle seat. Thus, there are advantages of reducing friction caused by the webbing 600 and assisting the improvement of the ride quality.

The webbing guide 700 may be rotatably coupled to the one corner of the upper end cross member 120, which constitutes the seat back frame 100, by using the bolt 520 as the medium.

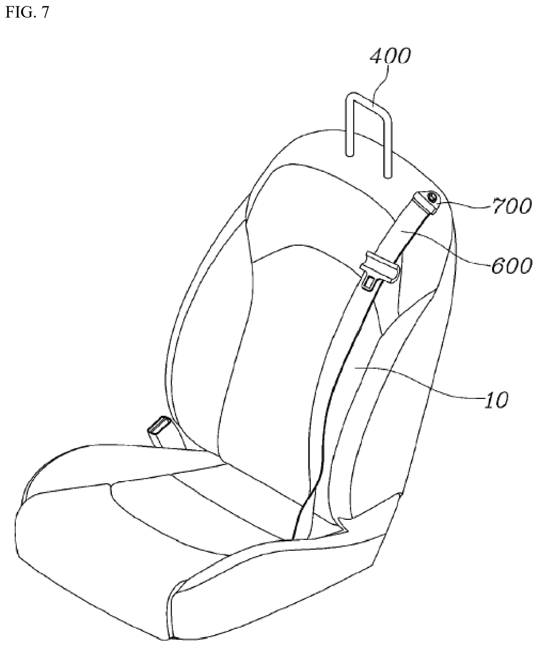

FIG. 7 illustrates an initial state of the vehicle seat in which the webbing 600 is not worn by the passenger. In the initial state, the webbing 600 passing through the webbing guide 700 is disposed outside a seat bolster 10.

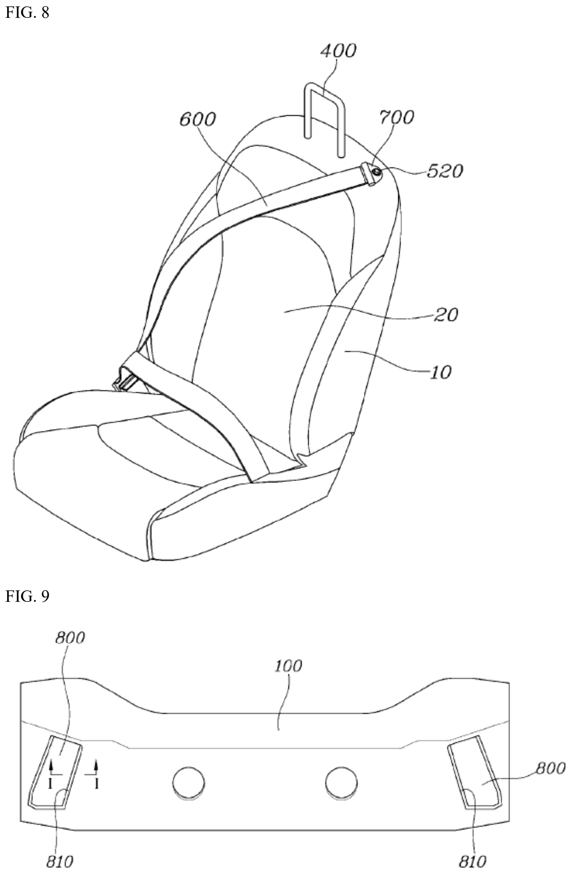

FIG. 8 presumptively illustrates a state in which the webbing is worn by the passenger. When the passenger wears the webbing 600, the webbing guide 700 rotates in a clockwise direction about the bolt 520 in the drawing, and the webbing 600 is withdrawn in an inward direction of the seat back 20, which is a direction in which the webbing 600 is worn by the passenger sitting on the vehicle seat, due to the rotation of the webbing guide 700.

In addition, when the passenger releases the worn state of the webbing 600, the webbing guide 700 and the webbing 600 are restored to the initial state shown in FIG. 7 due to the rotation caused by spring force of the retractor 200 and a weight of the webbing guide 700.

In the initial state in which the webbing 600 is not worn by the passenger, the webbing 600 passing through the webbing guide 700 is disposed outside the seat bolster 10. Thus, since the webbing 600 is disposed on the side surface of the seat when the passenger sits on the vehicle seat, there is an advantage of allowing the passenger to easily access the seat.

In addition, in the state in which the passenger wears the webbing 600, the webbing 600 is withdrawn in the inward direction of the seat back 20, which is the direction in which the webbing 600 is worn by the passenger, through the rotation of the webbing guide 700. Thus, there are advantages of reducing the friction caused by the webbing 600 and assisting the improvement of the ride quality.

According to the present invention, a webbing port 800 through which the webbing 600 moves is vertically provided in the upper end of the seat back frame 100.

The webbing port 800 may be provided in the upper end cross member 120 constituting the seat back frame 100, or a separate bracket may be coupled to the upper end cross member 120 so that the webbing port is provided in the separate bracket.

A size of a hole of the webbing port 800 may be changed to have various dimensions in consideration of the shape of the seat and the rotation of the webbing guide 700 due to the body type of the passenger. The size of the webbing port 800 is preferably set to be maximized within such a range that the webbing 600, which is withdrawn through the webbing guide 700, does not interfere with the webbing port 800 in order to prevent damage to the webbing 600 caused by the friction.

The hole of the webbing port 800 may be designed in various shapes, such as a circular shape, a semicircular shape, a rectangular shape, etc.

According to the present invention, the webbing port 800 may be provided at one or both of the right side and the left side of the upper end of the seat back frame 100.

That is, the webbing port 800 may be provided at one of the right side and the left side of the upper end of the seat back frame 100 depending on whether a driver seat and a steering wheel are disposed at the right side or the left side of the vehicle, or may be provided both at the right side and the left side of the upper end of the seat back frame 100 so as to be used in common.

According to the embodiment of the present invention, a guide 810 may be coupled to a periphery of the webbing port 800 to prevent direct contact between the webbing 600 and the webbing port 800.

Since the webbing port 800 is provided in the seat back frame 100 or the upper end cross member 120, which is made of a steel material, and the webbing 600 is made of cloth.

When the webbing 600 is in frequent contact with the webbing port 800 during the withdrawal and retraction of the webbing 600, the webbing 600 may be damaged due to the abrasion.

In order to prevent undesired damage to the webbing 600, the present invention is designed to prevent the direct contact between the webbing port 800 made of the steel material and the webbing 600. For this, the guide 810, which is made of plastic material having low friction, is coupled to the periphery of the webbing port 800 to cause the guide 810 to be in contact with the webbing 600.

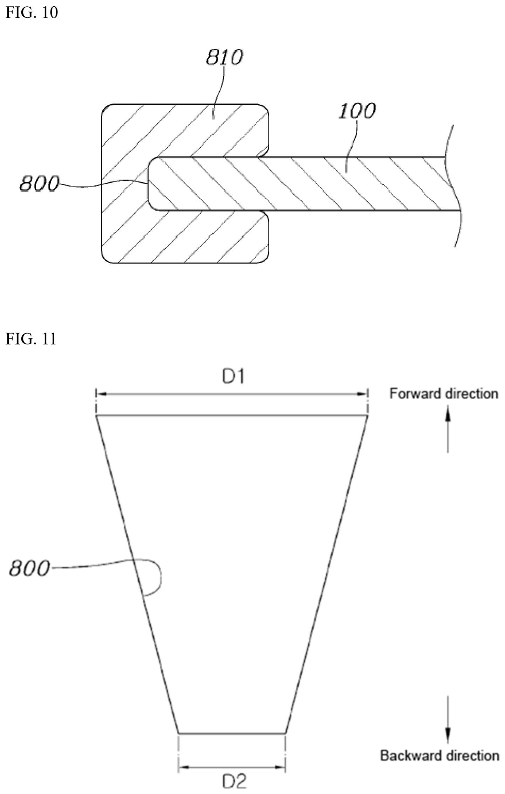

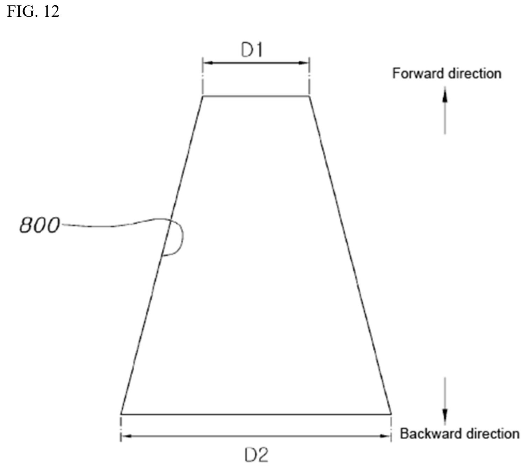

In the case in which the passenger sitting on the vehicle seat has a body size larger than an average size of adult humans, a front width D1 of the webbing port 800 is preferably equal to or larger than a rear width D2 of the webbing port 800, as illustrated in FIG. 11. In contrast, in the case in which the passenger sitting on the vehicle seat has a body size smaller than the average size of adult humans, the rear width D2 of the webbing port 800 is preferably greater than the front width D1 of the webbing port 800, as illustrated in FIG. 12.

The shape of the hole of the webbing port 800 may be changed according to an amount of rotation of the webbing guide 700 between the state in which the passenger does not wear the webbing 600 and the state in which the passenger wears the webbing 600.

That is, in the case in which the passenger has the body size equal to or larger than the average size of adult humans, the front width D1 of the webbing port 800 is preferably greater than the rear width D2 of the webbing port 800 in consideration of a larger amount of rotation of the webbing guide 700.

In contrast, in the case in which the passenger has the body size smaller than the average size of adult humans, the rear width D2 of the webbing port 800 is preferably greater than the front width D1 of the webbing port 800 in consideration of a smaller amount of rotation of the webbing guide 700.

In this way, it is possible to maximally reduce the friction between the webbing port 800 and the webbing 600 by the change in size of the hole of the webbing port 800. As a result, it is possible to allow the webbing 600 to be easily withdrawn and thus to improve the durability of the webbing 600.

As described above, the vehicle seat according to the present invention may be configured so that the retractor 200 is installed to be built in the space below the upper end cross member 120 constituting the seat back frame 100, and the headrest pole 300 is installed to vertically pass through the retractor 200 to realize the slimness of the seat back 20 and relatively widen the passenger compartment through the slimness of the seat back 20, thereby improving the ride quality.

Although embodiments have been described with reference to a number of illustrative embodiments thereof, it should be understood that numerous other modifications and embodiments may be devised by those skilled in the art that will fall within the spirit and scope of the principles of the present invention.

### Industrial Applicability

The present invention is applied to the vehicle seat technology in which the retractor is installed to be built in the upper end of the seat back frame in the structure provided with the seat back and the headrest pole passes through the retractor.

## Claims

1. A vehicle seat comprising: a seat back frame constituting a framework of the seat; and a retractor installed to be built in an internal space of the seat back frame on an upper end of the seat back frame.

2. The vehicle seat according to claim 1, further comprising a headrest pole installed to vertically pass through the retractor.

3. The vehicle seat according to claim 1, wherein the seat back frame comprises: a pair of side frames laterally spaced apart from each other and extending vertically; and an upper end cross member configured to connect upper ends of the pair of side frames to each other in a lateral direction, wherein the retractor is inserted to be built in a space below the upper end cross member and is fixedly coupled to the side frames and the upper end cross member.

4. The vehicle seat according to claim 2, wherein the retractor comprises: a first mount unit in the center on which a pre-tensioner and a self-correction sensor are mounted; a second mount unit which is disposed at one side of the first mount unit and on which a spool and a load limiter are mounted; and a third mount unit which is disposed at another side of the first mount unit and on which a pre-tensioner is mounted, wherein the headrest poles are installed to vertically pass through a space between the first mount unit and the second mount unit and a space between the first mount unit and the third mount unit, respectively.

5. The vehicle seat according to claim 2, wherein a section through which passes the retractor in the headrest poles is surrounded and protected by a retractor frame.

6. The vehicle seat according to claim 1, further comprising a webbing guide which is rotatably coupled to one side of the upper end of the seat back frame and through which a webbing passes.

7. The vehicle seat according to claim 6, wherein, in an initial state of the seat in which the webbing is not worn by a passenger, the webbing passing through the webbing guide is disposed outside a seat bolster; when the passenger wears the webbing, the webbing is withdrawn in an inward direction of the seat back, which is a direction, in which the webbing is worn by the passenger, due to the rotation of the webbing guide; and when the passenger releases the worn state of the webbing, the webbing guide and the webbing are restored to the initial state due to the rotation caused by spring force of the retractor and a weight of the webbing guide.

8. The vehicle seat according to claim 1, wherein a webbing port through which the webbing moves is provided to vertically pass through an upper end of the seat back frame.

9. The vehicle seat according to claim 8, wherein the webbing port is provided at any one of a left side and a right side of the upper end of the seat back frame or provided at both the left side and the right side of the upper end of the seat back frame.

10. The vehicle seat according to claim 8, wherein a guide is coupled to a periphery of the webbing port to prevent direct contact between the webbing and the webbing port.

11. The vehicle seat according to claim 8, wherein, when a passenger sitting on the vehicle seat has a body size equal to or larger than an average body size of adult humans, the webbing port has a front width greater than a rear width thereof.

12. The vehicle seat according to claim 8, wherein, when a passenger sitting on the vehicle seat has a body size smaller than an average body size of adult humans, the webbing port has a rear width greater than a front width thereof.
